# FASCICULE DE BREVET EUROPEEN

(11) **EP 1 982 068 B1**
(45) Date de publication et mention de la délivrance du brevet: **21.04.2010**
(21) Numéro de dépôt: 07731564.6
(22) Date de dépôt: 01.02.2007
(51) Int. Cl.: F02M 25/00, B60K 15/00, F02D 19/12

(54) **DISPOSITIF D'INTRODUCTION AUTOMATIQUE DE MOYENS FORMANT ADDITIF DANS LE CIRCUIT DE DISTRIBUTION DE CARBURANT D'UN VEHICULE AUTOMOBILE**
VERFAHREN ZUR EINFÜHRUNG VON ZUSATZBILDENDEN MITTELN IN DEN KRAFTSTOFFVERTEILER EINES KRAFTFAHRZEUGS
DEVICE FOR INTRODUCING ADDITIVE FORMING MEANS IN A MOTOR VEHICLE FUEL DISTRIBUTION CIRCUIT

(30) Priorité: 10.02.2006 FR 0601221
(43) Date de publication de la demande: 22.10.2008
(73) Titulaire: PEUGEOT CITROËN AUTOMOBILES S.A., 78140 Vélizy Villacoublay (FR)
(72) Inventeur: CREPEAU, Gérald, F-92700 Colombes (FR); MAIRE, François, F-92400 Courbevoie (FR)
(74) Mandataire: Ménès, Catherine
(86) Numéro de dépôt international: PCT/FR2007/050736
(87) Numéro de publication internationale: WO 2007/090978

(56) Documents cités:
- EP-A- 1 506 994
- EP-A1- 0 488 831
- EP-A1- 0 661 429
- WO-A-97/45507
- WO-A2-02/097256
- DE-A1- 10 311 287
- FR-A1- 2 668 203
- US-A- 5 300 218

## Description

La présente invention concerne un dispositif d'introduction automatique en quantités dosées de moyens formant additif dans le circuit de distribution de carburant d'un véhicule automobile.

Plus particulièrement, l'invention se rapporte à un tel dispositif dans lequel le véhicule comporte un moteur thermique tel que par exemple un moteur Diesel, dont la ligne d'échappement comporte des moyens de dépollution constitués par exemple par un filtre à particules ou autres.

On sait en effet qu'il existe déjà dans l'état de la technique, des dispositifs d'introduction dans le réservoir de carburant d'un additif d'aide à la régénération de ce type de filtre à particules, l'additif étant destiné à être mélangé au carburant et à se déposer avec les particules auxquelles il est mélangé sur un tel filtre, afin d'abaisser la température de combustion des particules, ce qui permet de faciliter la régénération du filtre.

De tels dispositifs d'introduction comportent alors un réservoir pour les moyens formant additif, des moyens d'injection d'une quantité de moyens formant additif reliés au réservoir de carburant et au réservoir de moyens formant additif, des moyens de mesure de la quantité de carburant introduite dans le réservoir au cours d'une opération de réapprovisionnement et des moyens de calcul et de commande permettant de calculer la quantité correspondante de moyens formant additif à injecter dans le réservoir de carburant, pour maintenir la concentration des moyens formant additif dans le réservoir à la valeur prédéterminée et de commander les moyens d'injection pour réaliser l'injection de la quantité de moyens formant additif calculée.

On pourra par exemple se reporter aux documents FR-2 668 203, FR-2 669 967, FR-2 714 694 et WO 02/097256 A2, pour une description complète de tels dispositifs.

Le but de l'invention est de perfectionner de tels dispositifs pour améliorer les prestations et/ou la durabilité des moteurs des véhicules.

A cet effet, l'invention a pour objet un dispositif d'introduction automatique en quantités dosées de moyens formant additif dans le circuit de distribution d'un véhicule automobile comportant des moyens de dépollution disposés dans la ligne d'échappement du moteur du véhicule, pour maintenir à une valeur prédéterminée la concentration d'additif dans le carburant contenu dans le réservoir et comportant un réservoir pour les moyens formant additif, des moyens d'injection d'additif reliés au réservoir d'additif et au réservoir de carburant, des moyens de mesure de la quantité de carburant introduite dans le réservoir au cours de chaque opération de réapprovisionnement et des moyens de calcul et de commande permettant de calculer la quantité correspondante d'additif à injecter dans le réservoir pour maintenir la concentration d'additif dans le carburant contenu dans le réservoir à la valeur prédéterminée et de commander les moyens d'injection pour réaliser l'injection de la quantité d'additif calculée, caractérisé en ce que les moyens formant additif dans le réservoir d'additif comprennent un mélange d'additifs contenant au moins un additif d'aide à la régénération des moyens de dépollution et en ce que le dispositif comporte en outre au moins un corps échangeur d'ions installé dans au moins une partie du circuit de distribution du carburant entre le réservoir et le moteur et en contact avec le carburant, ledit corps étant apte à stocker au moins un moyen formant additif et à le relâcher progressivement dans le carburant.

Le mélange d'additifs contient en outre au moins un autre additif choisi dans le groupe comprenant :
- un additif d'amélioration de la distribution de carburant dans le moteur,
- un additif d'amélioration des performances de fonctionnement du moteur, et
- un additif d'amélioration de la stabilité du fonctionnement du moteur.

Suivant d'autres caractéristiques de l'invention :
- l'additif d'amélioration de la distribution de carburant dans le moteur comporte un additif antimousse, un additif dégivrant, un additif d'opérabilité à froid, un additif d'écoulement et/ou un additif anti-corrosion ;
- l'additif d'amélioration des performances de fonctionnement du moteur comporte un additif procétane, un additif détergent, un additif d'amélioration du pouvoir lubrifiant du carburant, un additif inhibiteur de fumées et/ou un additif de réduction des pertes par friction dans le moteur ; et
- l'additif d'amélioration de la stabilité de fonctionnement du moteur comporte un additif anti-oxydant, un additif stabilisateur, un additif désactivateur de métaux et/ou un additif dispersant.

Par ailleurs, le corps échangeur d'ions peut présenter les caractéristiques suivantes :
- il relâche à la fois des additifs anioniques et cationiques,
- il est formé d'une résine ou d'un gel,
- il se présente sous la forme de capsules placées dans un moyen de stockage perméable au carburant,
- il est fixé à une paroi du circuit de distribution de carburant en contact avec le carburant.

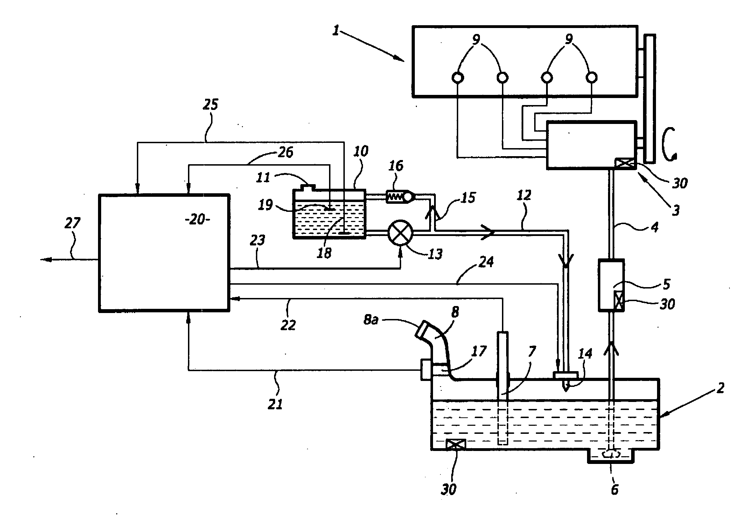

L'invention sera mieux comprise à la lecture de la description qui va suivre, donnée uniquement à titre d'exemple et faite en se référant au dessin annexé qui représente un schéma synoptique illustrant la structure et le fonctionnement d'un dispositif d'introduction de moyens formant additif selon l'invention.

Comme cela a été mentionné précédemment, le but de l'invention est de proposer un dispositif d'additivation de carburant embarqué à bord d'un véhicule, afin d'améliorer les prestations du moteur de celui-ci ainsi que la durabilité d'un véhicule par exemple Diesel, équipé de moyens de dépollution tels qu'un filtre à particules, fonctionnant à partir d'une additivation embarquée.

Un tel dispositif permet alors d'améliorer la durabilité des motorisations Diesel en agissant sur l'usure moteur, l'encrassement des injecteurs, le grippage par exemple d'une pompe d'injection et des injecteurs, la propreté de celui-ci, etc...

Un tel dispositif permet également d'améliorer l'agrément de conduite notamment en termes de bruit, de facilité de démarrage, de puissance ou encore de consommation.

De plus, un tel dispositif doit également faciliter le respect des réglementations relatives aux émissions polluantes des moteurs, telles que par exemple les fumées, etc.

Un tel dispositif ne doit également entraîner aucun changement relatif à l'architecture du moteur et à son environnement, ce qui permet en particulier de réduire les coûts, notamment pour les véhicules déjà équipés d'un dispositif d'additivation notamment pour filtre à particules.

Enfin, un tel dispositif doit également permettre l'utilisation d'additifs pouvant être adaptés en fonction des besoins.

Un tel dispositif met alors en oeuvre des dispositifs d'additivation déjà développés dans les véhicules à motorisation Diesel.

Plusieurs caractéristiques liées au fonctionnement des moteurs sont en effet reconnues comme généralement très importantes pour les clients. Leur importance relative dépend du type du moteur et du cycle utilisé, mais on peut considérer que parmi ces caractéristiques importantes, on trouve :
- le démarrage et l'opérabilité à froid,
- l'usure moteur,
- l'encrassement du moteur et des injecteurs,
- le grippage des pompes et des injecteurs,
- la puissance,
- le bruit,
- la maintenance du filtre à carburant,
- la consommation en carburant,
- l'intervalle de vidange du lubrifiant moteur,
- les émissions polluantes, etc...

La définition d'un moteur à un impact d'ordre un sur la plupart de ces caractéristiques. Cependant, ces dernières sont affectées par les propriétés du carburant et par conséquent, par la présence ou non d'additifs ainsi que leur concentration dans celui-ci.

Les additifs pour carburant Diesel sont utilisés pour une large variété d'objectifs. Cependant, ils peuvent être groupés dans trois catégories majeures, à savoir :
- les additifs d'amélioration de la distribution de carburant dans le moteur (additif modificateur de friction),
- les additifs d'amélioration de performances du moteur, et
- les additifs d'amélioration de la stabilité de fonctionnement de celui-ci.

Dans le dispositif selon l'invention, on propose d'utiliser un mélange d'additifs qui comporte au moins un additif d'aide à la régénération des moyens de dépollution intégrés dans la ligne d'échappement du moteur et au moins un autre additif de l'un ou plusieurs des types d'additifs mentionnés précédemment.

Parmi les additifs d'amélioration de la distribution de carburant dans le moteur, on trouve par exemple des additifs antimousse. Certains carburants Diesel ont en effet tendance à mousser lorsqu'ils sont pompés dans le réservoir du véhicule. Cette mousse peut perturber le remplissage complet du réservoir. La plupart des additifs antimousse sont des organosilicones et sont utilisés à des concentrations de 10ppm au moins.

D'autres additifs sont par exemple des additifs dégivrants.

L'eau libre des gazoles givre en effet à basse température. Les cristaux de glace résultant peuvent alors boucher des lignes du circuit de carburant ou des filtres de carburant et bloquer le passage de celui-ci. Des alcools de poids moléculaire bas ou glycols peuvent alors être ajoutés au carburant pour prévenir la formation de cette glace. Ces alcools/glycols se dissolvent dans l'eau libre préférentiellement et donnent un point réfrigérant inférieur au résultat obtenu avec de l'eau seule.

D'autres additifs sont des additifs d'opérabilité à froid. La plupart de ces additifs sont des polymères qui réagissent réciproquement avec les cristaux que forme le carburant quand ce dernier est refroidi en dessous de son point de trouble. Ces polymères atténuent l'effet des cristaux sur le débit du carburant en modifiant leur dimension, leur forme et/ou leur degré d'agglomération. Un additif particulier ne sera pas d'une efficacité comparable suivant la nature du carburant. Pour être efficace, ces additifs d'opérabilité à froid doivent être mélangés dans le carburant avant que tout cristal ne soit formé, c'est-à-dire quand le carburant est au dessus de son point de trouble.

Ces additifs apportent alors des gains en température avant que le carburant ne se trouble ou se fige.

Des additifs d'écoulement peuvent également être utilisés. Ces additifs d'écoulement comprennent par exemple des polymères de hauts poids moléculaires qui réduisent la turbulence dans les fluides et peuvent augmenter le débit de 20 à 40%. Ces additifs sont utilisés avec des concentrations en dessous de 15 ppm de façon typique. Quand ce produit traverse une pompe, l'additif est brisé en plus petites molécules, ce qui n'entraîne aucun effet sur les performances du moteur.

Des additifs inhibiteurs de corrosion peuvent également être utilisés. Ces inhibiteurs de corrosion sont des composés qui s'attachent aux surfaces du métal et forment une barrière qui prévient l'attaque par des agents corrosifs. Ils sont situés dans une gamme de concentration de 5 ppm à 15 ppm.

Des additifs d'amélioration des performances de fonctionnement des moteurs peuvent également être utilisés.

Cette classe d'additifs permet en effet d'améliorer les performances de fonctionnement d'un moteur, mais les effets des différents additifs de cette classe, sont appréciés pour des délais différents. Tout avantage fourni par un additif procétane par exemple est immédiat, alors que les effets bénéfiques des additifs de type détergent ou des additifs d'amélioration du pouvoir lubrifiant sont vus à plus long terme, c'est-à-dire souvent mesurés après quelques dizaines de milliers de kilomètres parcourus par le véhicule.

Ainsi, par exemple, des additifs de type procétane permettent de réduire le bruit de la combustion ainsi que les fumées.

L'avantage de l'utilisation d'un tel additif varie selon la conception du moteur et les cartographies moteur utilisées.

L'additif procétane le plus largement utilisé est le 2-Ethylhexyl-nitrate (EHN). L'EHN est instable thermiquement et se décompose aux hautes températures dans la chambre de combustion du moteur. Ces produits de combustion aident la combustion du moteur et donc raccourcissent la période du délai d'auto-inflammation du carburant. L'augmentation de l'indice de cétane dans le carburant pour une concentration donnée d'EHN varie d'un carburant à un autre. Elle est d'autant plus importante que le carburant a un indice de cétane naturel déjà relativement haut. L'augmentation d'accroissement devient d'autant plus faible que la concentration d'EHN est augmentée. L'EHN est usuellement utilisé dans une gamme de concentration variant de 0,05% en masse à 0,4% en masse et permet d'augmenter de 3 à 8 points l'indice de cétane du carburant.

D'autres nitrates d'alkyl ou nitrates d'éther et quelques composés nitreux, sont également des additifs de type procétane possibles. Le di-tertiaire butyl peroxyde a été introduit récemment sur le marché.

Il est à noter qu'un inconvénient de l'EHN est qu'il diminue la stabilité thermique de quelques carburants.

Des additifs détergents peuvent également être utilisés. Le carburant forme en effet des dépôts au niveau des trous des injecteurs en particulier. L'ampleur de la formation du dépôt varie avec la conception du moteur, la composition du carburant et la composition du lubrifiant. Les dépôts excessifs peuvent modifier l'aérodynamique par exemple du jet de l'injecteur, laquelle à son tour peut entraver le mélange air-carburant. Dans certains cas, il en résulte une surconsommation de carburant, une perte de puissance du moteur et des émissions de polluants augmentées.

Les additifs détergents (polyisobutène succinimine amide ou amine (PIBSA), polymères sans cendre, dérivés d'alkylphénols, amides d'acides gras) peuvent nettoyer l'injecteur et/ou laisser propres les injecteurs. Ces additifs sont composés d'un groupe polaire qui se lie aux dépôts et/ou aux précurseurs du dépôt et d'un groupe apolaire qui se dissout dans le carburant. Donc, les additifs détergents dissolvent les dépôts déjà formés et entravent les précurseurs de dépôt, afin d'éviter la formation de nouveaux dépôts. Les additifs détergents sont utilisés dans la gamme de concentration de 10 ppm à 1000 ppm par kilo de carburant.

Des additifs d'amélioration du pouvoir lubrifiant peuvent également être utilisés pour éviter le grippage des pompes à haute pression notamment et des injecteurs, à cause du mauvais pouvoir lubrifiant des carburants. Ils contiennent un groupe polaire qui est attiré par les surfaces métalliques pour former un film de protection à la surface. Le film agit comme une huile lorsque deux surfaces métalliques entrent en contact. Deux types de fonctionnalité chimique de ces additifs, acide gras et esters, sont couramment utilisés. Les acides gras sont utilisés dans la gamme de concentration de 10 ppm à 50 ppm. Puisque les esters sont moins polaires, ils exigent une plus haute gamme de concentration de 50 ppm à 250 ppm.

Des additifs inhibiteurs de fumées peuvent également être utilisés. Quelques composés organométalliques agissent comme catalyseurs de combustion. Ces composés permettent de réduire les émissions de fumées noires qui résultent d'une combustion incomplète. Cependant, ces composés métalliques peuvent être interdits dans certains pays.

Des additifs réduisant les pertes par friction permettent de réduire les frottements dans le circuit carburant entraînant ainsi un gain en matière de consommation de carburant. Sur certains véhicules, des gains en consommation supérieurs à 4% ont été constatés lors d'essais.

Ces additifs sont également appelés additifs FM pour « Friction Modifier » ou additifs « d'extrême pression ».

De même, des additifs d'amélioration de la stabilité de fonctionnement des moteurs peuvent être envisagés.

L'instabilité des carburants entraîne la formation de gommes qui participent à l'encrassement des injecteurs, au colmatage du filtre à carburant et à l'encrassement des pompes et du système d'injection. Ces additifs ont des performances qui sont conditionnées par leur utilisation dans un carburant approprié ou non.

Des additifs de type antioxydants peuvent également être utilisés. Un mode d'instabilité du carburant est l'oxydation. L'oxygène dans la petite quantité d'air dissoute dans le carburant attaque des composés réactifs présents dans le carburant. L'oxydation est le résultat d'une succession de mécanismes complexes. Les antioxydants travaillent en interrompant ces mécanismes. Les phénols ramifiés et certaines amines, telles que la phénylenediamine, sont les oxydants les plus communément rencontrés. Ils sont en effet utilisés dans une gamme de concentration de 10 ppm à 80 ppm.

Des additifs stabilisateurs peuvent également être employés. Les réactions acide-base sont un autre mode d'instabilité du carburant. Les additifs stabilisateurs qui préviennent ces réactions sont des amines de base forte et sont utilisés dans la gamme de concentration de 50 ppm à 150 ppm.

Ils réagissent avec les acides faibles pour former des produits qui restent dissous dans le carburant mais qui ne peuvent plus réagir.

Des additifs désactivateurs de métaux peuvent également être envisagés. La présence des métaux à l'état de trace (Cu et Fe par exemple) suffit pour accélérer le processus de dégradation du carburant. Les désactivateurs neutralisent leurs effets catalytiques. Ils sont utilisés dans la gamme de concentration de 1 ppm à 15 ppm.

Enfin, des additifs dispersants peuvent également être prévus. Ces additifs dispersants ne préviennent pas une réaction de l'instabilité du carburant, mais ils dispersent les particules formées et préviennent l'agglomération de particules assez grosses pour boucher le filtre à carburant ou les injecteurs. Les additifs dispersants sont utilisés dans une gamme de concentration de 15 ppm à 100 ppm.

Un ou plusieurs des types d'additifs mentionnés précédemment peuvent alors être utilisés en mettant en oeuvre des systèmes déjà embarqués à bord des véhicules, tels que les dispositifs d'introduction automatique de quantités dosées de moyens formant additif, dans le réservoir de carburant d'un véhicule.

En fait, ces dispositifs ont été développés pour ajouter au carburant un additif d'aide à la régénération des moyens de dépollution, tels que par exemple un filtre à particules, intégrés dans une ligne d'échappement d'un moteur par exemple Diesel de véhicule automobile.

Cet additif est mis en solution dans un solvant à une certaine concentration déterminée sur un véhicule donné.

Or, il apparaît que ce solvant peut être modifié afin de permettre l'ajout d'au moins un autre additif tel que décrit précédemment, compatible avec l'additif d'aide à la régénération du filtre à particules, soit en changeant le solvant de l'additif, soit en augmentant le volume du réservoir d'additif.

Selon l'invention, le dispositif d'introduction automatique en quantités dosées de moyens formant additif dans le circuit de distribution comporte également au moins un corps échangeur d'ions installé dans au moins une partie du circuit de distribution du carburant entre le réservoir et le moteur et en contact avec le carburant, ledit corps étant apte à stocker au moins un moyen formant additif et à le relâcher progressivement dans le carburant.

Le corps échangeur d'ions peut être formé par une résine ou un gel, le terme résine étant employé indifféremment pour qualifier les deux formes.

Ces résines sont insolubles et compatibles avec tout type de carburant fossiles et/ou d'origine biologique et avec l'eau.

La structure polymérique de la résine est par exemple constituée de styrène réticulé avec 2% à 8% de divinylbenzène. La quantité de réticulation détermine à la fois la taille des pores et la capacité de la résine. Le type d'échange réalisé (cation ou anion) est déterminé par les groupes fonctionnels ajoutés à la résine. Les résines échangeuses d'anions et les résines échangeuses de cations peuvent être utilisées dans la présente invention.

Les résines cationiques comportent par exemple un acide sulfonique pour fixer les additifs cationiques. Ce type de résine peut être utilisé pour relâcher les additifs carburants suivants : additifs anti-mousse, additifs d'opérabilité à froid, additifs d'écoulement, additifs procétane, détergents, additifs inhibiteurs de fumées, additifs anti-oxydants, stabilisateurs et désactivateurs de métaux.

Il est également possible d'utiliser des résines échangeuses d'ions contenant des groupes amines, alkyl- ou alkyleneamines, sels d'ammonium, groupements triazine, ou d'autres groupes fonctionnels.

Les résines échangeuses d'anions présentent par exemple des groupes fonctionnels triméthylbenzylammonium ou ethyleneamine. Ce type de résine peut être utilisé pour relâcher les additifs carburants suivants : additifs dégivrants, additifs d'écoulement, inhibiteurs de corrosion, améliorateurs de pouvoir lubrifiant, réducteurs des pertes de friction et dispersants.

Ces résines ou gels peuvent être bi-fonctionnels, c'est-à-dire permettant la diffusion d'additifs carburants anioniques et cationiques en incorporant dans celles-ci des fonctions acides et basiques en utilisant des résines échangeuses de cations sous forme de capsules et des résines échangeuses d'anions sous forme d'autres capsules indépendantes.

La vitesse d'échange des ions d'une résine dans le carburant et donc sa durée de vie dépendent du type de résine utilisé, de son caractère plus ou moins acide ou basique, de la granulométrie de la résine et de l'affinité de l'ion échangé pour la résine, qui elle-même dépend de la charge de l'ion et de sa taille. La capacité d'échange d'une résine est en général de 3 à 6 moles de groupes actifs par kilo de résine sèche.

Les avantages de combiner un tel dispositif d'introduction automatique avec les résines décrites plus haut sont les suivants :
- afin d'être pleinement efficaces, les additifs doivent être présents dans le carburant à une concentration en matière active minimale. Or certains des additifs décrits plus haut peuvent présenter des viscosités élevées ; il peut donc s'avérer difficile de combiner plusieurs additifs dans le réservoir d'additif d'aide à la régénération de filtres à particules. La viscosité élevée du mélange peut même nécessiter d'utiliser des systèmes d'injection plus précis. L'augmentation du volume du réservoir pour pallier cette viscosité élevée peut ne pas être suffisante ni même souhaitable. Ainsi l'utilisation de résines échangeuses d'ions permet d'introduire dans le carburant un ou des additifs supplémentaires par rapport à ceux déjà présents dans le réservoir d'additif de régénération du filtre à particules, ce qui permet de pallier l'augmentation de densité du mélange.
- Les additifs pour carburant peuvent présenter des incompatibilités entre eux, ou avec l'additif de régénération du filtre à particules, ou avec le solvant utilisé. L'utilisation conjointe de résines échangeuses d'ions permet de pallier ce problème de compatibilité.
- La résine et ses sites réactifs peuvent être adaptés aux besoins. Par exemple, ces derniers peuvent être choisis pour échanger un additif avec un contaminant ou une impureté du carburant, résultat que ne permet pas d'atteindre un dispositif simple d'introduction d'additifs dans le réservoir d'additif de régénération du filtre à particules. De cette façon, le carburant est débarrassé de certains composants indésirables et en même temps complété avec un additif qui améliore les performances du moteur.

Ceci permet alors d'améliorer les prestations moteur et la durabilité des véhicules Diesel par l'utilisation d'additifs carburant adaptés pour répondre tant à l'amélioration constante de la satisfaction du client qu'à la résolution de problèmes clientèle liés à la mauvaise qualité des carburants pouvant être rencontrée par le client.

Un tel dispositif est illustré sur la figure annexée.

Sur la figure, on a en effet représenté schématiquement un moteur Diesel, désigné dans son ensemble par la référence 1, d'un véhicule automobile et qui est alimenté en gazole à partir d'un réservoir de carburant 2, par l'intermédiaire d'une pompe d'injection 3.

La pompe d'injection 3 est reliée au réservoir 2 par une conduite d'aspiration 4 sur laquelle est intercalé un filtre 5.

La conduite d'aspiration 4 comporte une partie d'extrémité opposée à la pompe 3 qui est plongée à l'intérieur du réservoir 2 pour déboucher, à sa partie inférieure, sous la forme d'une crépine d'aspiration 6.

De plus, la pompe 3 est reliée aux cylindres du moteur 1 par des conduites assurant chacune l'alimentation d'un injecteur 9 associé à un cylindre du moteur.

Des moyens à rampe commune d'alimentation peuvent également être envisagés.

Le réservoir 2 est équipé d'une jauge de niveau 7 permettant de déterminer la position du niveau du gazole dans ce réservoir 2.

Le réservoir 2 comporte également une tubulure de remplissage 8 débouchant dans la partie supérieure de ce réservoir 2 et équipée d'un bouchon de fermeture 8a.

La ligne d'échappement du véhicule, dont la propulsion est assurée par le moteur Diesel, comporte des moyens de dépollution comme par exemple un filtre à particules, non représenté, permettant d'arrêter les particules de suie formées dans les gaz d'échappement du moteur.

Le véhicule comporte un réservoir d'additif 10 muni d'un bouchon de remplissage 11 et destiné à contenir un mélange d'additifs tels que décrits précédemment en solution dans un solvant liquide.

Une conduite 12 d'injection d'additif liquide est reliée au réservoir d'additif 10, au voisinage de sa partie inférieure. Une pompe de dosage 13 est intercalée sur la conduite 12 qui est reliée, à son extrémité opposée au réservoir d'additif 10, à un injecteur 14 débouchant directement dans le réservoir de carburant 2.

Une conduite de retour 15 communiquant avec la conduite d'injection 12, en aval de la pompe 13, est reliée à la partie supérieure du réservoir d'additif 10. Un régulateur de pression 16 constitué par un clapet à bille comportant un ressort de tarage est intercalé sur la conduite de retour 15.

Le dispositif d'introduction automatique d'additif selon l'invention comporte également un boîtier électronique de commande 20 intégré au véhicule et permettant d'assurer toutes les fonctions de réglage et de surveillance de l'introduction d'additif en quantités dosées dans le réservoir de carburant 2 du véhicule.

Le dispositif d'introduction automatique d'additif comporte également des moyens de mesure de la quantité de carburant introduite dans le réservoir 2 au cours de chaque opération de réapprovisionnement.

Ainsi que représenté sur la figure, ces moyens de mesure sont formés par exemple par un débitmètre mono-directionnel 17 placé directement dans la tubulure 8 de remplissage du réservoir de carburant 2.

Le débitmètre 17 est relié au boîtier électronique 20 par un câble électrique 21 qui permet de transmettre automatiquement audit boîtier 20 la quantité de carburant introduite dans le réservoir 2 lors du réapprovisionnement de ce réservoir 2 en carburant.

La jauge de niveau 7 associée au réservoir de carburant 2 est reliée par un câble électrique 22 au boîtier 20, de manière à transmettre à ce boîtier 20 ainsi qu'au conducteur du véhicule, un signal électrique représentatif du niveau de carburant à l'intérieur dudit réservoir 2.

Le boîtier électronique 20 est relié par des câbles électriques, respectivement 23 et 24, à la pompe 13 et à l'injecteur 14, de manière à transmettre à ces éléments du dispositif d'introduction d'additif un signal de commande assurant une injection en quantité dosée, du mélange d'additifs dans le réservoir 2 de carburant, dans les conditions qui seront décrites ultérieurement.

Une jauge de niveau 18 reliée au boîtier électronique 20 par un câble électrique 25 permet de transmettre à ce boîtier 20 un signal électrique lorsque le niveau d'additif dans le réservoir 10 est parvenu dans une position minimale voisine du fond de ce réservoir 10.

Une sonde de température 19 disposée dans le réservoir d'additif 10 permet de transmettre au boîtier électronique 20, par l'intermédiaire d'un câble électrique 26, un signal représentatif de la température de cet additif liquide à l'intérieur dudit réservoir 10.

Le boîtier électronique 20 comporte au moins une sortie 27 constituée par au moins un câble électrique relié à des voyants qui peuvent être situés avantageusement dans l'habitacle du véhicule automobile.

L'allumage d'un premier voyant est obtenu lorsque le niveau d'additif détecté par la jauge 18 dans le réservoir d'additif 10 est parvenu dans la position correspondant au niveau minimal voisin du fond de ce réservoir 10 et l'allumage d'un second voyant est obtenu lorsque le niveau de carburant détecté par la jauge 7 dans le réservoir de carburant 2 est parvenu dans une position correspondant au niveau minimal voisin du fond de ce réservoir de carburant 2.

Le boîtier électronique 20 reçoit également comme donnée d'entrée un signal électrique représentatif de la concentration déterminée en additif qu'il est nécessaire de maintenir dans le carburant, c'est-à-dire dans le gazole injecté dans les cylindres du moteur 1.

Cette donnée relative à la concentration d'additif dans le carburant peut être également déterminée a priori et correspondre à une valeur fixe quelles que soient les conditions d'utilisation du moteur. Dans ce cas, les composants électroniques sont prévus de manière à prendre en compte cette valeur prédéterminée et invariable.

Certains éléments du dispositif d'introduction d'additif peuvent être constitués par des éléments utilisés de manière classique pour la construction des moteurs de véhicules automobiles et de leurs organes de commande.

C'est ainsi que l'ensemble d'injection d'additif comprenant la pompe 13, le régulateur de pression 16 et éventuellement l'injecteur 14 peut être constitué par un dispositif d'injection classique tel qu'utilisé sur les véhicules automobiles comportant un moteur à injection.

Dans le circuit de distribution du carburant selon l'invention, comme par exemple dans le réservoir 2 ou dans le filtre 5 ou dans la pompe 3, sont disposés un ou plusieurs corps échangeurs d'ions 30 pour relâcher dans le carburant un ou plusieurs additifs anioniques ou cationiques.

En se reportant maintenant à la figure, on va décrire le fonctionnement du dispositif d'introduction automatique en quantités dosées d'additif dans le circuit de distribution du carburant du véhicule automobile pour maintenir à une valeur prédéterminée la concentration d'additif dans le carburant.

Lorsque l'utilisateur du véhicule effectue un réapprovisionnement du réservoir 2 en carburant, il introduit le pistolet de la pompe dans la tubulure de remplissage 8.

Ainsi, au cours de l'écoulement du carburant dans cette tubulure 8, le débitmètre 17 mesure directement, dans la tubulure 8, la quantité de carburant introduite dans le réservoir 2.

Le débitmètre 17 transmet donc par le câble électrique 21 le signal représentatif de la quantité de carburant introduite dans le réservoir 2.

Au démarrage du moteur 1, le contact électrique du véhicule permet de mettre en fonctionnement le boîtier électronique 20 pour la détermination et la réalisation de l'injection d'additif dans le réservoir de carburant 2.

A cet effet, le boîtier de commande 20 effectue le calcul de la quantité d'additif à introduire dans le réservoir 2, en fonction de la quantité de carburant introduite dans ce réservoir 2 et de la concentration prédéterminée en additif du carburant, pour obtenir des conditions de fonctionnement satisfaisantes du filtre à particules.

Le signal représentatif de la quantité d'additif à introduire dans le réservoir de carburant 2 est transformé en un signal de commande de la pompe d'injection 13 et en un signal de commande de l'injecteur 14.

Le signal de commande de l'injecteur 14 permet de maintenir cet injecteur ouvert pendant un temps suffisant pour réaliser l'injection de la quantité déterminée d'additif à pression constante dans le réservoir de carburant 2, la pompe 13 restant en fonctionnement pendant un temps suffisant pour réaliser cette injection directement dans ledit réservoir de carburant 2.

A l'issue de l'injection d'additif, le gazole contenu dans le réservoir 2 présente une concentration en additif qui correspond parfaitement à la concentration prédéterminée nécessaire pour obtenir un fonctionnement satisfaisant notamment du filtre à particules.

En outre, la concentration en additif du gazole dans le réservoir 2 est parfaitement homogène du fait du brassage assuré par la pompe d'injection 3.

Le moteur 1 et le filtre à particules qui lui est associé dans la ligne d'échappement peuvent alors fonctionner dans des conditions satisfaisantes.

La température de l'additif injecté directement dans le réservoir 2 peut être réglée grâce à la jauge de température 19 et un circuit de mise en température de l'additif dans le réservoir 10.

Selon une variante, la température mesurée par la jauge 19 peut être prise en compte par le boîtier électronique 20 pour calculer le temps d'injection de l'additif à température constante. En effet, le temps d'injection d'une quantité déterminée d'additif à pression constante varie en fonction de la viscosité, donc de la température de cet additif.

On conçoit alors qu'une telle structure permet d'injecter dans le réservoir de carburant, un mélange d'additifs comprenant un ou plusieurs des additifs tels que mentionnés précédemment, pour permettre d'éviter l'encrassement des injecteurs du moteur et éventuellement d'un turbocompresseur associé à celui-ci, de stabiliser l'additif d'aide à la régénération des moyens de dépollution afin de pouvoir diminuer sa concentration tout en empêchant la formation de gommes et/ou de sédiments, d'améliorer les propriétés du carburant local en améliorant le pouvoir lubrifiant de celui-ci ou le démarrage à froid et de réduire les pertes par frottement et ainsi abaisser la consommation de carburant par exemple.

Toutes autres combinaisons d'effets ou introduction d'effets sont possibles, à savoir par exemple : réduction des fumées, fluidification du carburant à froid, etc...

On conçoit également que les résines échangeuses d'ions placées dans le circuit de distribution de carburant peuvent relâcher des additifs complémentaires à ceux qui ont été ajoutés dans le réservoir d'additif de régénération de filtre à particules.

Bien entendu, d'autres modes de réalisation encore peuvent être envisagés.

## Revendications

1. Dispositif d'introduction automatique en quantités dosées de moyens formant additif dans le circuit de distribution de carburant d'un véhicule automobile comportant des moyens de dépollution disposés dans la ligne d'échappement du moteur (1) du véhicule, pour maintenir à une valeur prédéterminée, la concentration d'additif dans le carburant contenu dans le réservoir (2) et comportant un réservoir (10) pour les moyens formant additif, des moyens (13, 14) d'injection d'additif reliés au réservoir (10) d'additif et au réservoir (2) de carburant, des moyens (17) de mesure de la quantité de carburant introduite dans le réservoir (2) au cours de chaque opération de réapprovisionnement et des moyens (20) de calcul et de commande permettant de calculer la quantité correspondante d'additif à injecter dans le réservoir (2) pour maintenir la concentration d'additif dans le carburant contenu dans le réservoir (2) à la valeur prédéterminée et de commander les moyens (13, 14) d'injection pour réaliser l'injection de la quantité d'additif calculée, **caractérisé en ce que** les moyens formant additif dans le réservoir d'additif (10) comprennent un mélange d'additifs contenant au moins un additif d'aide à la régénération des moyens de dépollution et **en ce que** le dispositif comporte en outre au moins un corps échangeur d'ions installé dans une partie du circuit de distribution du carburant entre le réservoir et le moteur et en contact avec le carburant, le ou chaque corps échangeur d'ions étant apte à stocker au moins un moyen formant additif et à le relâcher progressivement dans le carburant et **en ce que** le mélange d'additifs contient en outre au moins un autre additif choisi dans le groupe comprenant un additif d'amélioration de la distribution de carburant dans le moteur, un additif d'amélioration des performances de fonctionnement du moteur, et un additif d'amélioration de la stabilité du fonctionnement du moteur.

2. Dispositif selon la revendication 1, **caractérisé en ce que** l'additif d'amélioration de la distribution de carburant dans le moteur comporte un additif antimousse, un additif dégivrant, un additif d'opérabilité à froid, un additif d'écoulement et/ou un additif anti-corrosion.

3. Dispositif selon la revendication 1, **caractérisé en ce que** l'additif d'amélioration des performances de fonctionnement du moteur comporte un additif procétane, un additif détergent, un additif d'amélioration du pouvoir lubrifiant du carburant, un additif inhibiteur de fumées et/ou un additif de réduction des pertes par friction dans le moteur.

4. Dispositif selon la revendication 1, **caractérisé en ce que** l'additif d'amélioration de la stabilité de fonctionnement du moteur comporte un additif anti-oxydant, un additif stabilisateur, un additif désactivateur de métaux et/ou un additif dispersant

5. Dispositif selon l'une quelconque des revendications précédentes **caractérisé en ce que** le ou chaque corps échangeur d'ions permet de relâcher au moins un moyen formant additif différent de celui ou ceux présents dans le mélange d'additifs stocké dans le réservoir d'additif (10).

6. Dispositif selon l'une quelconque des revendications précédentes **caractérisé en ce que** le corps échangeur d'ions permet de relâcher à la fois des additifs cationiques et anioniques.

7. Dispositif selon l'une quelconque des revendications précédentes **caractérisé en ce que** le corps échangeur d'ions est une résine.

8. Dispositif selon l'une quelconque des revendications précédentes **caractérisé en ce que** le corps échangeur d'ions est un gel.

9. Dispositif selon l'une quelconque des revendications précédentes **caractérisé en ce que** le corps échangeur d'ions est placé dans le filtre à carburant.

10. Dispositif selon l'une quelconque des revendications précédentes **caractérisé en ce que** le corps échangeur d'ions est placé dans la pompe à carburant.

11. Dispositif selon l'une quelconque des revendications précédentes **caractérisé en ce que** le corps échangeur d'ions se présente sous la forme de capsules placées dans un moyen de stockage perméable au carburant.

12. Dispositif selon l'une quelconque des revendications précédentes **caractérisé en ce que** le corps échangeur d'ions est fixé à une paroi du circuit de distribution de carburant en contact avec le carburant.

## Claims

1. Device for the automatic introduction of additive forming means in dosed quantities in the fuel distribution circuit of an automobile vehicle, comprising depolluting means arranged in the exhaust line of the engine (1) of the vehicle, to maintain at a predetermined value the concentration of additive in the fuel contained in the tank (2) and comprising a tank (10) for the additive forming means, means (13, 14) for injecting additive connected to the additive tank (10) and to the fuel tank (2), means (17) for measuring the quantity of fuel introduced in the tank (2) during each refuelling operating and calculating and control means (20) allowing the calculation of the corresponding quantity of additive to be injected in the tank (2) to maintain the concentration of additive in the fuel contained in the tank (2) at the predetermined value and to control the injection means (13, 14) to realize the injection of the calculated quantity of additive, **characterized in that** the additive forming means in the additive tank (10) comprise a mixture of additives containing at least one additive for assisting the regeneration of the depolluting means and **in that** the device further comprises at least one ion-exchanging body installed in a part of the fuel distribution circuit between the tank and the engine and in contact with the fuel, the or each ion-exchanging body being capable of storing at least one additive forming means and of releasing it progressively in the fuel and **in that** the mixture of additives further contains at least one other additive selected from the group comprising an additive for improving the distribution of fuel in the engine, an additive for improving the functioning performances of the engine, and an additive for improving the stability of the functioning of the engine.

2. Device according to Claim 1, **characterized in that** the additive for improving the distribution of fuel in the engine comprises an anti-foam additive, a de-icing additive, an additive for cold operability, a flow additive and/or an anti-corrosion additive.

3. Device according to Claim 1, **characterized in that** the additive for improving the functioning performances of the engine comprises a procetane additive, a detergent additive, an additive to improve the lubricating power of the fuel, a fume-inhibiting additive and/or an additive for reducing friction losses in the engine.

4. Device according to Claim 1, **characterized in that** the additive for improving the stability of functioning of the engine comprises an anti-oxidant additive, a stabilizing additive, a metal-deactivating additive and/or a dispersing additive.

5. Device according to any of the preceding claims, **characterized in that** the or each ion exchanger body allows at least one additive forming means to be released which is different from that or those present in the mixture of additives stored in the additive tank (10).

6. Device according to any of the preceding claims, **characterized in that** the ion exchanger body allows cationic and anionic additives to be released at the same time.

7. Device according to any of the preceding claims, **characterized in that** the ion exchanger body is a resin.

8. Device according to any of the preceding claims, **characterized in that** the ion exchanger body is a gel.

9. Device according to any of the preceding claims, **characterized in that** the ion exchanger body is placed in the fuel filter.

10. Device according to any of the preceding claims, **characterized in that** the ion exchanger body is placed in the fuel pump.

11. Device according to any of the preceding claims, **characterized in that** the ion exchanger body is present in the form of capsules placed in a storage means which is permeable to the fuel.

12. Device according to any of the preceding claims, **characterized in that** the ion exchanger body is fixed to a wall of the fuel distribution circuit in contact with the fuel.

## Patentansprüche

1. Automatische Einführvorrichtung in dosierten Mengen von Mitteln, die einen Zusatzstoff bilden, in den Kraftstoffverteilungskreislauf eines Kraftfahrzeugs, der Mittel zum Reinigen aufweist, die in der Auspuffleitung des Motors (1) des Fahrzeugs angeordnet sind, um die Zusatzstoffkonzentration in dem Kraftstoff, der in dem Tank (2) enthalten ist, auf einem vorbestimmten Wert zu halten, und einen Behälter (10) für die Mittel, die einen Zusatzstoff bilden, aufweist, Mittel (13, 14) zum Einspritzen von Zusatzstoff, die mit dem Zusatzstoffbehälter (10) und dem Kraftstofftank (2) verbunden sind, Mittel (17) zum Messen der Menge Kraftstoff, die in den Tank (2) im Laufe jedes Auftankens eingeführt wird, und Mittel (20) zum Berechnen und Steuern, die es erlauben, die entsprechende Menge Zusatzstoff zu berechnen, die in den Tank (2) einzuspritzen ist, um die Zusatzstoffkonzentration, die in dem Kraftstoff in dem Tank (2) enthalten ist, auf dem vorbestimmten Wert zu halten und die Mittel (13, 14) zum Einspritzen zu steuern, um das Einspritzen der berechneten Zusatzstoffmenge auszuführen, **dadurch gekennzeichnet, dass** die einen Zusatzstoff bildenden Mittel in dem Zusatzstoffbehälter (10) ein Gemisch aus Zusatzstoffen enthalten, das mindestens einen Zusatzstoff zum Unterstützen der Regenerierung der Reinigungsmittel enthält, und dass die Vorrichtung ferner mindestens einen Ionenaustauschkörper aufweist, der in einem Teil des Verteilungskreislaufs des Kraftstoffs zwischen dem Tank und dem Motor installiert und mit dem Kraftstoff in Berührung ist, wobei jeder Ionenaustauschkörper geeignet ist, um mindestens ein Mittel zu lagern, das einen Zusatzstoff bildet, und es allmählich in dem Kraftstoff freizusetzen, und dass das Gemisch aus Zusatzstoffen ferner mindestens einen weiteren Zusatzstoff aufweist, der aus der Gruppe ausgewählt ist, die einen Zusatzstoff zum Verbessern der Kraftstoffverteilung in dem Motor, einen Zusatzstoff zum Verbessern der Betriebsleistungen des Motors und einen Zusatzstoff zum Verbessern der Betriebsbeständigkeit des Motors enthält.

2. Vorrichtung nach Anspruch 1, **dadurch gekennzeichnet, dass** der Zusatzstoff zur Verbesserung der Kraftstoffverteilung in dem Motor einen Entschäumer-Zusatzstoff, einen Frostschutzzusatzstoff, einen Zusatzstoff für die Betriebsfähigkeit im kalten Zustand, einen Fließzusatzstoff und/oder einen Frostschutzzusatzstoff aufweist.

3. Vorrichtung nach Anspruch 1, **dadurch gekennzeichnet, dass** der Zusatzstoff zum Verbessern der Betriebsleistungen des Motors einen Procetan-Zusatzstoff, einen Waschmittelzusatzstoff, einen Zusatzstoff zum Verbessern des Schmiervermögens des Kraftstoffs, einen Zusatzstoff zum Verhindern von Rauchgasen und/oder einen Zusatzstoff zum Verringern der Reibungsverluste in dem Motor aufweist.

4. Vorrichtung nach Anspruch 1, **dadurch gekennzeichnet, dass** der Zusatzstoff zum Verbessern der Betriebsbeständigkeit des Motors einen Oxidationsschutz-Zusatzstoff, einen stabilisierenden Zusatzstoff, einen Zusatzstoff zum Deaktivieren von Metallen und/oder einen dispergierenden Zusatzstoff aufweist.

5. Vorrichtung nach einem der vorhergehenden Ansprüche, **dadurch gekennzeichnet, dass** der oder jeder Ionenaustauschkörper es ermöglicht, mindestens ein Mittel freizusetzen, das einen Zusatzstoff bildet, der unterschiedlich von dem oder denen ist, die in dem Zusatzstoffgemisch gegenwärtig sind, das in dem Zusatzstoffbehälter (10) gelagert ist.

6. Vorrichtung nach einem der vorhergehenden Ansprüche, **dadurch gekennzeichnet, dass** der Ionenaustauschkörper es erlaubt, gleichzeitig kationische und anionische Zusatzstoffe freizugeben.

7. Vorrichtung nach einem der vorhergehenden Ansprüche, **dadurch gekennzeichnet, dass** der Ionenaustauschkörper ein Harz ist.

8. Vorrichtung nach einem der vorhergehenden Ansprüche, **dadurch gekennzeichnet, dass** der Ionenaustauschkörper einen Gel ist.

9. Vorrichtung nach einem der vorhergehenden Ansprüche, **dadurch gekennzeichnet, dass** der Ionenaustauschkörper in dem Kraftstofffilter platziert ist.

10. Vorrichtung nach einem der vorhergehenden Ansprüche, **dadurch gekennzeichnet, dass** der Ionenaustauschkörper in der Kraftstoffpumpe platziert ist.

11. Vorrichtung nach einem der vorhergehenden Ansprüche, **dadurch gekennzeichnet, dass** der Ionenaustauschkörper die Form von Kapseln hat, die in ein Mittel zum Lagern, das für Kraftstoff durchlässig ist, platziert sind.

12. Vorrichtung nach einem der vorhergehenden Ansprüche, **dadurch gekennzeichnet, dass** der Ionenaustauschkörper an einer Wand des Kraftstoffverteilungskreislaufs in Berührung mit dem Kraftstoff befestigt ist.
